# EUROPÄISCHE PATENTANMELDUNG

(11) **EP 1 637 278 A2**
(43) Veröffentlichungstag der Anmeldung: **22.03.2006**
(21) Anmeldenummer: 05107940.8
(22) Anmeldetag: 30.08.2005
(51) Int. Cl.: B23Q 3/155, E06B 3/96, B29C 37/04

(54) **Verfahren und Vorrichtung zum Bearbeiten von Fensterrahmen**

(30) Priorität: 16.09.2004 DE 102004045345
(71) Anmelder: WILLI STÜRTZ MASCHINENBAU GmbH, D-53577 Neustadt (DE)
(72) Erfinder: STÜRTZ, Karl-Heinz, 53577, Neustadt-Roth (DE); ZENKER, Dieter, 50739, Köln (DE)
(74) Vertreter: Wolff, Felix

(57) **Zusammenfassung**

Die Erfindung bezieht sich auf ein Verfahren zum Bearbeiten eines aus Kunststoffprofilen zusammengeschweißten Fensterrahmens (1), bei dem ein mit einem in mindestens zwei Achsen bewegbaren Werkzeugträger (5) verbundenes Bearbeitungswerkzeug gegen den Fensterrahmen angestellt und an demselben die durch die Art des Bearbeitungswerkzeuges vorgegebene Bearbeitung durchgeführt wird.

Um einerseits alle normalerweise in einer Ecke eines Fensterrahmens (1) anfallenden Bearbeitungen durchführen zu können und andererseits bei einer Vielzahl von einzusetzenden Bearbeitungswerkzeugen äußerst wenig Platz für den Werkzeugträger (5) zu benötigen, wird ein in mindestens einem Werkzeugmagazin (11) vorgehaltenes Bearbeitungswerkzeug in eine Bewegungsbahn des Werkzeugträgers (5) gebracht, mit demselben für einen Bearbeitungsvorgang gekoppelt und anschließend wieder an das Werkzeugmagazin (11) zurückgegeben.

## Beschreibung

Die Erfindung bezieht sich auf ein Verfahren zum Bearbeiten eines aus Kunststoffprofilen zusammengeschweißten Fensterrahmens, bei dem ein mit einem in mindestens zwei Achsen bewegbaren Werkzeugträger verbundenes Bearbeitungswerkzeug gegen den Fensterrahmen angestellt und an demselben die durch die Art des Bearbeitungswerkzeuges vorgegebene Bearbeitung durchgeführt wird sowie auf eine Vorrichtung zur Durchführung des Verfahrens.

Die Herstellung von Fensterrahmen aus Kunststoff erfolgt in der Weise, dass zunächst meistens nur vier Kunststoffprofilstäbe auf eine vorgegebene Länge zugeschnitten, in eine Schweißmaschine eingelegt, ausgerichtet und eingespannt und danach an ihren Verbindungsflächen erhitzt und anschließend unter Druck unter Bildung von sogenannten Schweißraupen miteinander verschweißt werden. Im Anschluß daran müssen die sichtbaren Schweißraupen entfernt und meistens noch andere Bearbeitungen am Fensterrahmen durchgeführt werden. Diese Bearbeitungen können entweder an einer Rahmenecke, an zwei Rahmenecken oder an allen vier Rahmenecken gleichzeitig durchgeführt werden. Für diese unterschiedlichen Bearbeitungen werden unterschiedliche Bearbeitungswerkzeuge verwendet, die beispielsweise aus verschiedenen Messern, einer Fräseinheit, einer Bohreinheit und anderen Bearbeitungswerkzeugen bestehen, wobei die Bohreinheit mehrere Bohrer unterschiedlichen Durchmessers aufnehmen kann. Alle Bearbeitungswerkzeuge werden über dazu geeignete Halterungen von einem gemeinsamen Werkzeugträger aufgenommen, der zumindest in zwei senkrecht zueinander verlaufenden Achsen über meist von einem Computer gesteuerte Antriebe bewegbar ist. Mit zunehmender Anzahl der von dem Werkzeugträger aufzunehmenden Bearbeitungswerkzeuge nicht nur dessen Größe, sondern auch dessen Gewicht bzw. dessen Masse zu. Hinsichtlich zunehmender Größe ist zu berücksichtigen, dass der Platz, der für einen mit mehreren Bearbeitungswerkzeugen bestückten Werkzeugträger bei einer Vorrichtung, mit der Fensterrahmen bearbeitet werden, zur Verfügung steht, im Bereich einer Rahmenecke äußerst gering ist. Zunehmendes Gewicht hat den Nachteil, dass bei der Anstell- und der Arbeitsbewegung große Massen beschleunigt und verzögert werden müssen, was sich dann ungünstig auf die Bearbeitungszeit auswirkt. Dabei ist auch zu berücksichtigen, dass der Werkzeugträger Bearbeitungswerkzeuge aufnimmt bzw. trägt, die nicht bei jedem Fensterrahmen benötigt und damit nur selten eingesetzt werden.

Der Erfindung liegt deshalb die Aufgabe zugrunde, ein Verfahren aufzuzeigen, mit dem einerseits alle normalerweise in einer Ecke eines Fensterrahmens anfallenden Bearbeitungen durchgeführt werden können und welches andererseits bei einer Vielzahl von einzusetzenden Bearbeitungswerkzeugen äußerst wenig Platz für den Werkzeugträger benötigt wird. Dabei soll die zu bewegende Masse des Werkzeugträgers mit den Bearbeitungswerkzeugen zur Erzielung hoher Bearbeitungsgeschwindigkeiten äußerst klein gehalten werden können.

Zur Lösung dieser Aufgaben wird gemäß der Erfindung bei einem Verfahren zum Bearbeiten eines Fensterrahmens der eingangs beschriebenen Gattung vorgeschlagen, dass ein in mindestens einem Werkzeugmagazin vorgehaltenes Bearbeitungswerkzeug in eine Bewegungsbahn des Werkzeugträgers gebracht, mit demselben für einen Bearbeitungsvorgang gekoppelt und anschließend wieder an das Werkzeugmagazin zurückgegeben wird.

Durch ein solches Verfahren ist es möglich, die die Größe des Werkzeugträgers zu verringern und damit dessen bewegliche Masse mit den Bearbeitungswerkzeugen erheblich zu reduzieren. Grundsätzlich ist es möglich, den Werkzeugträger ohne ein Bearbeitungswerkzeug auszubilden und alle Werkzeuge einzeln aus dem Werkzeugmagazin zu entnehmen und mit dem Werkzeugträger nur für die jeweilige Bearbeitung kurzzeitig zu kuppeln. In der Praxis wird es jedoch so sein, dass auf dem Werkzeugträger nur zwei oder drei Bearbeitungswerkzeuge angeordnet sind, während alle anderen für eine Bearbeitung benötigten Bearbeitungswerkzeuge dem Werkzeugmagazin entnommen und mit dem Werkzeugträger gekuppelt werden. Durch die geringere Masse und die reduzierte Größe des Werkzeugträgers ist derselbe leicht und schnell zu bewegen, der Antrieb kann verkleinert werden und der Aufwand für eine Führung wird herabgesetzt.

Weitere Merkmale des erfindungsgemäßen Verfahrens sowie einer Vorrichtung zur Durchführung des Verfahrens sind in den Ansprüchen 2 bis 9 offenbart.

Die Erfindung wird nachfolgend anhand eines in einer Zeichnung dargestellten Ausführungsbeispieles näher erläutert.

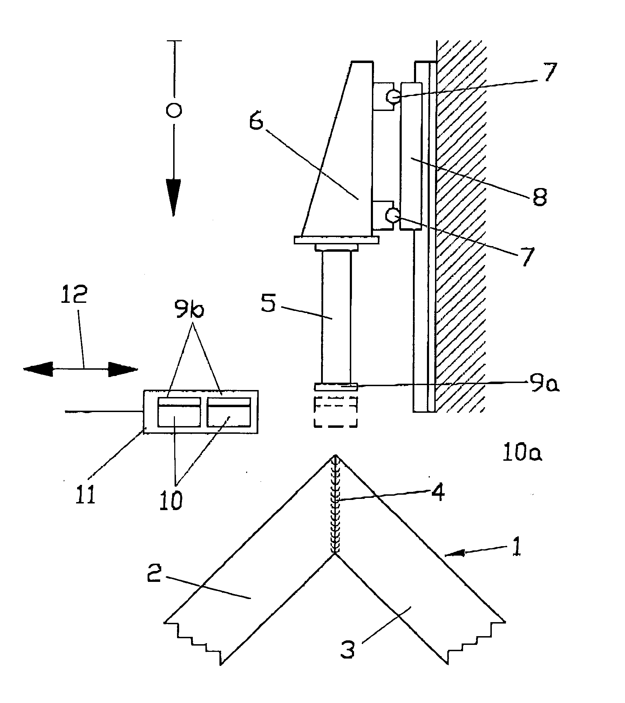

In dieser Zeichnung ist der schematische Aufbau einer erfindungsgemäßen Vorrichtung zur Bearbeitung einer Ecke eines Fensterrahmens 1 gezeigt, die nur die für die Durchführung des erfindungsgemäßen Verfahrens erforderlichen bzw. wesentlichen Teile allerdings in vereinfachter Darstellung enthält. Deshalb ist in der Zeichnung auch nur eine Ecke des Fensterrahmens 1 gezeichnet, die durch das Zusammenschweißen von zwei Profilstäben 2, 3 aus Kunststoff gebildet wurde. Bei diesem Zusammenschweißen ist in der gesamten Ecke, also oben und unten sowie vorne und hinten, eine Schweißraupe 4 entstanden, die zumindest an den sichtbaren Stellen des Fensterrahmens 1 entfernt werden muss. Dazu wird der Fensterrahmen 1 in an sich bekannter Weise in der eingezeichneten Lage beispielsweise an nicht dargestellte Anschläge zum Anliegen gebracht und festgespannt. Die Bearbeitung des Fensterrahmens 1 erfolgt durch besondere, den jeweiligen Bearbeitungsvorgängen entsprechende Bearbeitungswerkzeuge, die sich normalerweise auf bzw. an einem Werkzeugträger 5 befinden.

Als Bearbeitungswerkzeuge können beispielsweise ein Werkzeug bzw. ein Messer für eine Schattennut, ein Werkzeug bzw. ein Messer für die Innenecke, ein Fräser für die Außenecke und eine Bohreinheit mit mindestens einem Bohrer vorgesehen sein. Diese Bearbeitungswerkzeuge werden jeweils von einer besonderen Werkzeughalterung aufgenommen, die sich zumindest während des Bearbeitungsvorganges an bzw. auf dem Werkzeugträger befindet. Zumindest dem Fräser als auch der Bohreinheit ist ein zusätzlicher Antrieb zugeordnet. Der Werkzeugträger 5 gemäß der Zeichnung ist beispielsweise nur mit einem oder mit zwei Bearbeitungswerkzeugen bestückt, die der Einfachheit halber und zur deutlicheren Darstellung in der Zeichnung nicht eingezeichnet sind. Dieses eine Bearbeitungswerkzeug ist bzw. die beiden Bearbeitungswerkzeuge sind mit ihrer bzw. ihren Halterung(en) fest dem Werkzeugträger 5 zugeordnet. In der Zeichnung ist nur ein Werkzeugträger 5 zu sehen, der sich oberhalb des Fensterrahmens 1 befindet und mit dem nur Bearbeitungen oben sowie vorne und hinten am Fensterrahmen 1 durchgeführt werden können. In Abhängigkeit von der Ausgestaltung der Vorrichtung kann sich unterhalb des Fensterrahmens 1 noch ein zweiter Werkzeugträger 5 befinden, dem ähnliche oder andere Bearbeitungswerkzeuge mit den entsprechenden Werkzeughalterungen zugeordnet sind.

Der Werkzeugträger 5 ist in dem dargestellten Ausführungsbeispiel plattenartig ausgebildet- auch andere Ausgestaltungen sind möglich - und wird von einer Aufnahme 6 getragen, die auf Führungen 7 senkrecht zur Zeichnungsebene verschiebbar bzw. verfahrbar ist. Die Führungen 7 werden ihrerseits von einem Schlitten 8 getragen, der auf Führungen 9 in der Zeichnungsebene von unten nach oben und umgekehrt verschiebbar bzw. verfahrbar ist. Dadurch ist es möglich, den Werkzeugträger in sogenannter X- und Y-Richtung zu bewegen. Je nach Bedarf bzw. Ausgestaltung der Vorrichtung kann für den Werkzeugträger noch eine Bewegung in Z-Richtung vorgesehen sein. Alle Bewegungen des Werkzeugträgers werden über Antriebe von einem Computer gesteuert, in dem alle für die Bearbeitung des Fensterrahmens erforderlichen Daten bzw. Bewegungsabläufe gespeichert sind.

Im dargestellten Ausführungsbeispiel ist der Werkzeugträger 5 mit einem Kupplungsteil 9a versehen, welches mechanisch ausgebildet ist und über eine Steuerung betätigt bzw. zur Wirkung gebracht werden kann. Das andere Kupplungsteil 9b befindet sich an einer Werkzeughalterung 10, die mit einem weiteren, an sich bekannten, jedoch in der Zeichnung nicht dargestellten Bearbeitungswerkzeug bestückt ist. Diese Werkzeughalterung 10 befindet sich allein oder zusammen mit mindestens einer weiteren Werkzeughalterung 10 mit einem anderen Bearbeitungswerkzeug in einem Werkzeugmagazin 11, welches hier als verschiebbare Platte ausgebildet ist. Das Werkzeugmagazin 11 kann auch als drehbare Platte oder Trommel oder als umlaufender Kettenförderer ausgebildet sein. Das Werkzeugmagazin 11 ist nun so angeordnet und kann so über seinen Antrieb in Richtung des Doppelpfeils verschoben werden, dass eine der beiden Werkzeughalterungen 10 genau in eine vorgegebene Position zum Werkzeugträger 5 bringbar ist, wie dies die strichlierte Position 10a deutlich macht. In dieser Position der Werkzeughalterung 10 ist das, Kupplungsteil 9a mit dem Kupplungsteil 9b der Werkzeughalterung 10 verbindbar. Sobald diese Verbindung hergestellt ist wird das Werkzeugmagazin 11 wieder in seine gezeichnete Ausgangsposition zurückbewegt.

Jetzt ist es möglich, den Werkzeugträger 5 weiter in Richtung auf den Fensterrahmen 1 zu verschieben und in eine solche Lage zu bringen, dass das für eine Bearbeitung des Fensterrahmens benötigte Bearbeitungswerkzeug seine Bearbeitungslage einnehmen und die erforderliche Bearbeitung am Fensterrahmen durchführen kann. Sobald diese Bearbeitung beendet ist, wird der Werkzeugträger 5 zurückbewegt und wieder in eine solche Stellung gebracht, dass die mit demselben gekuppelte Werkzeughalterung 10 die bereits erwähnte strichlierte Lage 10a wieder einnimmt. In dieser Lage wird das Werkzeugmagazin 11 erneut aus seiner Ausgangsposition so weit in der Zeichnung nach rechts verschoben, dass dasselbe nach dem Lösen der Kupplungsteile 9a,9b die Werkzeughalterung 10 mit dem nicht gezeichneten Bearbeitungswerkzeug vom Werkzeugträger 5 übernehmen kann. Bedarfsweise kann das Werkzeugmagazin 11 auch eine Art Kupplung besitzen, mit der eine Werkzeughalterung 10 in bzw. auf dem Werkzeugmagazin gesichert ist.

Für den Fall, dass der Werkzeugträger 5 eine weitere Werkzeughalterung 10 mit einem anderen Bearbeitungswerkzeug übernehmen muss, ist es selbstverständlich, dass dann das Werkzeugmagazin 11 nicht in seine zunächst nicht in seine Ausgangsposition zurückkehrt, sondern so verschoben wird, dass jetzt auch das Kuppelteil 9b der weiteren Werkzeughalterung 10 mit dem Kuppelteil 9a des Werkzeugträgers 5 verbunden und danach eine andere Art der Bearbeitung am Fensterrahmen 1 durchgeführt werden kann. Es ist, im Rahmen der Erfindung liegend, auch möglich, vorher oder zwischenzeitlich ein Bearbeitungswerkzeug am Fensterrahmen 1 zum Einsatz zu bringen, welches sich nicht in dem Werkzeugmagazin 11 befindet, sondern mit seiner Halterung auf dem Werkzeugträger 5 angeordnet ist.

Falls sich in oder auf dem Werkzeugmagazin eine Werkzeughalterung 10 mit einem Bearbeitungswerkzeug befindet, welches zusätzlich einen eigenen Antrieb benötigt, ist es möglich, diesen Antrieb fest an der Werkzeughalterung 10 anzuordnen, so dass dieser Antrieb bei der Kupplung der Werkzeughalterung 10 des Werkzeugmagazins 11 mit dem Werkzeugträger 5 elektrisch oder mechanisch mit dem Werkzeugträger 5 verbunden werden kann.

Es ist auch im Rahmen der Erfindung möglich, für ein in oder auf dem Werkzeugmagazin 10 in einer Werkzeughalterung 10 befindliches Bearbeitungswerkzeug, welches einen eigenen Antrieb benötigt, auf dem Werkzeugträger 5 einen Antrieb vorzusehen, der bei einer Kupplung der entsprechenden Werkzeughalterung 11 mit dem Werkzeugträger 5 mit einem auf dem Werkzeugträger 5 angeordneten Antrieb zu verbinden. In beiden Fällen ist sichergestellt, dass eine Bearbeitung des Fensterrahmens 1 mit einem in oder auf dem Werkzeugmagazin 11 in einer Werkzeughalterung 10 angeordneten Bearbeitungswerkzeug, welches einen eigenen Antrieb benötigt, möglich ist.

Durch die Anordnung von für eine Bearbeitung eines Fensterrahmens 1 erforderlichen Bearbeitungswerkzeugen mit ihren Halterungen 10 in oder auf einem besonderen Werkzeugmagazin 11 kann der Werkzeugträger 5 klein und leicht ausgebildet sein. Er wird allenfalls nur solche Bearbeitungswerkzeuge aufnehmen, die kein hohes Gewicht besitzen und die vor allem bei der Bearbeitung eines jeden Fensterrahmens 1 benötigt werden.

In Abänderung des erläuterten Ausführungsbeispieles ist es für den Fall, dass der Werkzeugträger 5 kein eigenes Bearbeitungswerkzeug mit Werkzeughalterung besitzt, möglich, den Werkzeugträger lediglich als Kupplung auszubilden.

## Patentansprüche

1. Verfahren zum Bearbeiten eines aus Kunststoffprofilen zusammengeschweißten Fensterrahmens, bei dem ein mit einem in mindestens zwei Achsen bewegbaren Werkzeugträger verbundenes Bearbeitungswerkzeug gegen den Fensterrahmen angestellt und an demselben die durch die Art des Bearbeitungswerkzeuges vorgegebene Bearbeitung durchgeführt wird, **dadurch gekennzeichnet, dass** ein in mindestens einem Werkzeugmagazin vorgehaltenes Bearbeitungswerkzeug in eine Bewegungsbahn des Werkzeugträgers gebracht, mit demselben für einen Bearbeitungsvorgang gekoppelt und anschließend wieder an das Werkzeugmagazin zurückgegeben wird.

2. Verfahren nach Anspruch 1, **dadurch gekennzeichnet, dass** das Bearbeitungswerkzeug mit einem auf dem Werkzeugträger angeordneten Antrieb gekoppelt wird.

3. Verfahren nach Anspruch 1, **dadurch gekennzeichnet, dass** ein dem Bearbeitungswerkzeug im Werkzeugmagazin zugeordneter Antrieb mit dem Werkzeugträger gekoppelt wird.

4. Vorrichtung zur Durchführung eines Verfahrens nach mindestens einem der Ansprüche 1 bis 3, bestehend aus einem in mindestens zwei Achsen antriebsgesteuerten und mit einem Bearbeitungswerkzeug an die Bearbeitungsstelle des Fensterrahmens bewegbaren und dort eine vorgegebene Bearbeitung durchführenden Werkzeugträger, **dadurch gekennzeichnet, dass** mindestens ein mit mindestens einem abnehmbaren Bearbeitungswerkzeug bestücktes und in die Bewegungsbahn des Werkzeugträgers (5) bringbares Werkzeugmagazin (11) vorgesehen ist, dass das abnehmbare Bearbeitungswerkzeug ein Kupplungsteil (9b) aufweist und dass der Werkzeugträger (5) ein mit dem Kupplungsteil (9b) des Bearbeitungswerkzeuges verbindbares Kupplungsteil (9a) besitzt.

5. Vorrichtung nach Anspruch 4, **dadurch gekennzeichnet, dass** der Werkzeugträger (5) selbst als Kupplung ausgebildet ist.

6. Vorrichtung nach Anspruch 4 oder 5, **dadurch gekennzeichnet, dass** dem Bearbeitungswerkzeug in dem Werkzeugmagazin (11) ein ebenfalls mit dem Werkzeugträger (5) kuppelbarer Antrieb zugeordnet ist.

7. Vorrichtung nach Anspruch 4 oder 5, **dadurch gekennzeichnet, dass** der Werkzeugträger (5) einen mit einem Bearbeitungswerkzeug des Werkzeugmagazins (11) kuppelbaren Antrieb aufweist.

8. Vorrichtung nach mindestens einem der Ansprüche 4 bis 7, **dadurch gekennzeichnet, dass** das Werkzeugmagazin (11) als verschieb- oder drehbare Platte oder als drehbare Trommel ausgebildet ist.

9. Vorrichtung nach mindestens einem der Ansprüche 4 bis 7, **dadurch gekennzeichnet, dass** das Werkzeugmagazin (11) als Kettenförderer ausgebildet ist.
